# EUROPÄISCHE PATENTANMELDUNG

(11) **EP 1 508 818 A1**
(43) Veröffentlichungstag der Anmeldung: **23.02.2005**
(21) Anmeldenummer: 04005531.1
(22) Anmeldetag: 09.03.2004
(51) Int. Cl.: G01S 13/04, G01S 13/06, G01S 13/34, G01S 17/02, H01Q 3/30, H01Q 1/38, H01Q 21/06, H01Q 23/00, E05F 15/14, E05F 15/20, G01S 7/40, H01Q 3/26

(54) **Verfahren zum Betreiben eines Radarsensors**

(30) Priorität: 19.08.2003 DE 10338536
(71) Anmelder: Bircher Reglomat AG, 9042 Speicher (CH)
(72) Erfinder: Mezger, Klaus, 9038 Rehetobel (CH); Audergon, Léon, 9000 St. Gallen (CH)
(74) Vertreter: Weiss, Peter, Dr.

(57) **Zusammenfassung**

Bei einem Verfahren zum Betreiben eines Radarsensors im Nahbereich zur Erzeugung eines detektierbaren Erfassungsfeldes (5) für die Erkennung von Personen und/oder stationären Objekten mit einer Antenne, soll das Erfassungsfeld (5) elektronisch veränderbar oder justierbar sein.

## Beschreibung

Die Erfindung betrifft ein Verfahren zum Betreiben eines Radarsensors im Nahbereich zur Erzeugung eines detektierbaren Erfassungsfeldes für die Erkennung von Personen und/oder stationären Objekten mit einer Antenne.

Bei herkömmlichen Radarsensoren, denen meist auch stationäre Sensoren die Infrarotsender und -sensoren zugeordnet sind, ist das Erfassungfeld zu aufwendig zu bestimmen und einzustellen. Soll das Erfassungfeld geändert werden, so muss der Radarsensor manuell um seine Lage, beispielsweise in der Wand geneigt oder verändert werden.

Diese örtliche Veränderung des Radarsensors um seine Lage, beispielsweise gegenüber einer Wand oder gegenüber einem bestimmten Gegenstand ist sehr aufwendig und ungenau.

Insbesondere zur Bestimmung von stationären Hindernissen mit einer Distanz- und Phasenmessung kann ein Erfassungsfeld nicht immer sehr genau eingestellt werden, was unerwünscht ist.

Entsprechende Radarsensoren werden beispielsweise an automatischen Türen und Toren eingesetzt, die dem Öffnen und Schliessen von Türen und Toren dienen und gleichzeitig verhindern, dass Personen eingeklemmt oder verletzt werden. Die Sensoren können auf der Grundlage von passiv Infrarot, aktiv Infrarot, Ultraschall und Radar aufgebaut sein. Häufig werden auch Bewegungsensoren und Präsenzsensoren in einem Gerät kombiniert. Beispielsweise findet ein Radarbewegungssensor mit einem Aktiv-Infrarotpräsenzsensor häufig Anwendung.

Nachteilig ist hieran, dass das Erfassungsfeld manuell bei der Installation an der Türe ausgerichtet und justiert werden muss. Das bedeutet, dass das Fachpersonal, beispielsweise mittels einer Leiter zum Sensor aufsteigen und mittels Versuch durch Änderung der Neigung, beispielsweise mittels eines aufwendigen Verstellmechanismusses eine Schräglage des Sensors zur Beeinflussung des Erfassungsfeldes neu einstellen muss.

Dabei sind häufig Sensor und Auswerteelektronik im Gehäuse voneinander getrennt, was eine zusätzliche separate Halterung und weitere Stecker etc. voraussetzt.

Ferner ist nachteilig, dass herkömmliche Radarsensoren eine grosse Einbaugrösse und unerwünschte Einbautiefe erfordern und keine manuelle Einstellung bzw. Verstellung auf einfache Weise möglich ist. Zusätzlich können Infrarotsensoren vorgesehen sein, die durch Fremdlicht nachteilige beeinflussbar sind, so dass insbesondere bei Sonnenlicht die Sensoren nicht gleichmässig und kontinuierlich arbeiten. Ein weiterer Nachteil ist, dass herkömmliche Radarsensoren mit integrierten Infrarot-Präsenzsensoren aufgrund der Bodenbeschaffenheit und eines unterschiedlichen Reflektionsgrades des Bodens nicht überall eingesetzt werden können. Ein Reflektionsverhalten muss bei herkömmlichen Infrarot-Präsenzsensoren in den Sensor eingegeben bzw. abgeglichen werden, was unerwünscht ist. Das herkömmliche System muss über jedem Boden selbst justiert und ausgeregelt werden. Bei bestimmten Typen von Böden ist keine ausreichende Reflektion vorhanden, so dass herkömmliche Sensoren bzw. Radarsensoren nicht eingesetzt werden können. Insbesondere bei Ultraschallsensoren, können Luftbewegungen den Prozess unerwünscht beeinflussen.

Bei den herkömmlichen passiven Infrarotsystemen ist nachteilig, dass diese nur über Wärmedifferenzen ansprechen und keine sicherheitsrelevante Anwendung gewährleisten.

Der vorliegenden Erfindung liegt die Aufgabe zugrunde, ein Verfahren sowie ein Radarsensor zur Durchführung des Verfahrens zu schaffen, welche die genannten Nachteile beseitigen und mit welchen auf einfach und kostengünstige Weise ein Erfassungsfeld sich leicht einstellen und verändern lässt. Ferner soll der Radarsensor im Betrieb ständig auf Betriebssicherheit überprüfbar sein. Zudem sollen Fertigungskosten, Montagekosten sowie auch Einstellkosten erheblich reduziert werden.

Zur Lösung dieser Aufgabe führen die Merkmale des Patentanspruches 1 sowie die Merkmale der nebengeordneten Patentansprüche.

Bei der vorliegenden Erfindung hat sich als besonders vorteilhaft erwiesen, dass ein Radarsensor eine Mehrzahl von in einer Grundfläche vorgesehenen Slot-Antennen aufweist, um elektronisch ein Erfassungsfeld zu verändern.

Dabei kann dem dynamischen Radarsensor zusätzlich ein Präsenzsensor zugeordnet sein, der ebenfalls mit einem elektronisch verstellbaren Erfassungsfeld versehen ist. Dabei kann durch die Anzahl der entsprechenden Slot-Antennen, sowie durch die Anordnung der entsprechenden Slot-Antennen in der Grundfläche zueinander Einfluss auf das Erfassungsfeld genommen werden. Dabei kann die Erfassungsfeldeinstellung für einen bestimmten Typ, beispielsweise mit einer Fernbedienung erfolgen, welche die Werte für einen bestimmten Typ abspeichert und auf den entsprechenden Radarsensor überträgt. Dabei werden in einem Grundkörper die Slot-Antennen, der Präsenzsensor sowie die Auswerteelektronik und ggf. eine Hilfsantenne integriert eingesetzt, wobei beispielsweise auf einer Rückseite des Grundkörpers die Elektronik vorgesehen ist.

Dabei kann auch daran gedacht sein, dass durch beliebige Kombinationen von Präsenz- und Bewegungs-Sensormodulen mit gleichen Modulsystemen verschiedenste Türtypen und Einbausituationen abgedeckt bzw. kompensiert werden können.

Ferner ist von Vorteil bei der vorliegenden Erfindung, dass über den wählbaren Abstand A und/oder Abstand B zweier übereinander und/oder zweier nebeneinander angeordneter Slot-Antennen Einfluss auf die Grösse sowie die Position des erzeugten Erfassungsfeldes bzw. auf den Abstrahlwinkel α genommen werden kann. Hierdurch können insbesondere bewegte Objekte im erzeugten Dynamikfeld, als Erfassungsfeld genau detektiert werden.

Wichtig ist auch, dass die Grösse sowie der Ort des Dynamikfeldes exakt bestimmt und ausgerichtet werden kann. Ferner kann dem Radarsensor, insbesondere dem dynamischen Radarsensor ein Präsenzsensor zugeordnet sein. Jedoch soll auch im Rahmen der vorliegenden Erfindung liegen, den Präsenzsensor eigenständig und unabhängig vom Radarsensor einzusetzen, um statische Objekte in einem Präsenzfeld zu erkennen.

Zusätzlich kann der Präsenzsensor in einer gewünschten Breite und Länge ausgerichtet sein und lässt insbesondere durch Einsetzen eines Senders und eines Empfängers, insbesondere die Winkelbestimmung der phasenverschobenen Empfangssignale eine Lokalisierung und Bestimmung des Ortes und der Grösse des Objektes zu. Dies soll ebenfalls im Rahmen der vorliegenden Erfindung liegen.

Vorzugsweise ist der Präsenzsensor ein Radarsensor, insbesondere ein FMCW-Radarsensor mit integrierter unabhängiger Hilfsantenne zur Durchführung von Selbsttests. Durch die Beeinflussung der Nutzfeldenergie wird ein identifizierbares Ausgangssignal an der Empfangsantenne erzeugt. Dadurch kann der gesamte Signalpfad inkl. Antennen innerhalb des Sensorsystems überprüft werden.

Von Vorteil ist bei der vorliegenden Erfindung, dass insbesondere durch die Ausbildung von unterschiedlichen Anordnungen von Slot-Antennen geeignete und wählbare Erfassungsfelder erzeugt werden können, die sich elektronisch beispielsweise mittels einer Fernsteuerung oder Fernbedienung noch verändern lassen. Die Slot-Antennen bilden im wesentlichen den Bewegungssensor bzw. Dynamiksensor, wobei der Präsenzsensor lediglich der Distanz und Phasenmessung zur Erkennung eines stationären Hindernisses dient. Dabei kann auch elektronisch und einstellbar die Position und Dimensionierung des Erfassungsfeldes auch über Fernbedienung erfolgen, wobei über eine integrierte, unabhängige Hilfsantenne diese Selbsttests durchgeführt werden können.

Diese beiden Sensortypen, d.h. der Präsenzsensor sowie der Radarsensor können einzeln oder auch kombiniert in einem gemeinsamen Radarsensor bzw. Kombisensor untergebracht sein und 'ohne entsprechende mechanische Verstellmechanismen auf Türrahmen, Wände, vor entsprechenden Türen, Toren od. dgl. montiert werden. Dabei sind beliebige Kombinationen von Präsenz- und Bewegungssensoren bzw. Radarsensoren möglich. Dies soll ebenfalls im Rahmen der vorliegenden Erfindung liegen.

Weitere Vorteile, Merkmale und Einzelheiten der vorliegenden Erfindung ergeben sich aus der nachfolgenden Beschreibung bevorzugter Ausführungsbeispiele sowie anhand der Zeichnung; diese zeigt in
Figur 1a eine schematisch darstellte Draufsicht auf einen erfindungsgemässen Radarsensor;
Figur 1b schematisch dargestellte Seitenansichten auf eine mögliche Gebrauchslage des Radarsensors gemäss Figur 1a;
Figuren 2a bis 4 jeweilige Draufsichten auf weitere Ausführungsbeispiele von weiteren Radarsensoren;

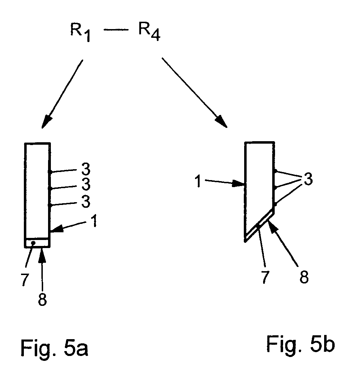

Figuren 5a und 5b weitere Ausführungsbeispiele der Radarsensoren gemäss den Figuren 2 bis 4 in den jeweiligen Seitenansichten.

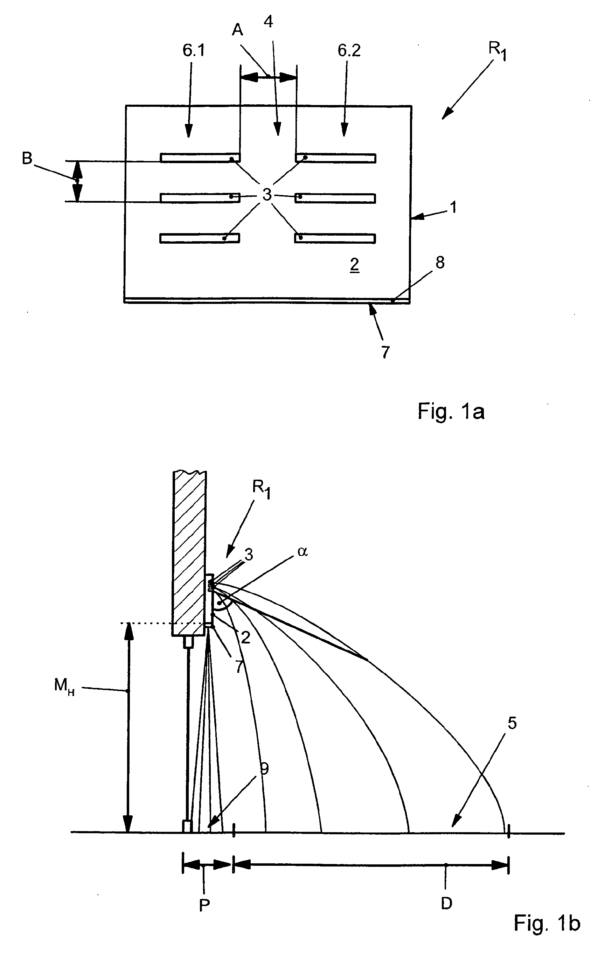

Gemäss Figur 1a besteht ein erfindungsgemässer Radarsensor R₁ aus einem Grundkörper 1, welcher eine äussere Grundfläche 2 aufweist, die vorzugsweise aus Metall gebildet ist. In der Grundfläche 2 sind eine Mehrzahl von Antennen, insbesondere Slot-Antennen 3 vorgesehen bzw. aus der Grundfläche 2 gebildet. Die Slot-Antennen 3 sind vorzugsweise als Dielektrikum aus der Grundfläche 2 gebildet bzw. als Dielektrikum aus dieser ausgespart. Als Antennen 3 können beliebige Antennen unterschiedlichster Art und Ausführung verwendet werden. Vorzugsweise werden jedoch Slot-Antennen 3 verwendet.

Wichtig ist bei der vorliegenden Erfindung, dass eine Anordnung 4, gebildet aus den einzelnen Slot-Antennen 3 zentrisch in der Grundplatte 2 vorgesehen ist, so dass hierdurch eine bestimmte Wellenfront generierbar ist, die in einem Abstrahlwinkel α, siehe Figur 1b ein gewünschtes Erfassungsfeld 5 bzw. Dynamikfeld D erzeugt. Lediglich durch die unterschiedlich wählbaren bzw. zu dimensionierenden Abstände A und/oder B der Slot-Antennen 3 zueinander, die übereinander und nebeneinander angeordnet in der Grundplatte 2 vorgesehen sind, ist ein Abstrahlwinkel α zur Bestimmung und Lokalisierung des Erfassungsfeldes 5 beeinflussbar. Insbesondere durch die Veränderung des Abstandes A und/oder B der beiden Slot-Antennen 3 zueinander lässt sich der Abstrahlwinkel α beeinflussen bzw. eine Breite und Grösse des Erfassungsfeldes 5 an einen gewünschten Ort bestimmen. Auf diese Weise kann in Abhängigkeit einer bestimmten Montagehöhe M_{H} ein Radarsensor R₁ geschaffen werden, welcher für jeden Einbauort spezifisch hergestellt werden kann. Über eine entsprechende Phasenverschiebung kann eine Feinjustierung des Erfassungsfeldes auch ggf. ferngesteuert vorgenommen werden.

Wichtig ist ferner, dass sich Abstrahlwinkel α und Feldgrösse durch die elektronische Steuerung der abgestrahlten Energien einzelner Antennenelemente, insbesondere Slot-Antennen 3 beeinflussen und verändern lassen. Ferner lässt sich durch die Gewinnung und die Auswertung der Phaseninformation, d.h. Auswertung von Frequenz und Phase eine elektronische Justiermöglichkeiten zu, in dem ein schwenken und ein Feldbegrenzen des Erfassungsfeldes elektronisch erfolgen kann. Daher kann auch Einfluss auf sich ändernde Montagehöhen M_{H} im Radarsensor R₁ genommen werden.

Dabei können mehrere Slot-Antennen 3 übereinander und auch mehrere Slot-Antennen 3 nebeneinander, vorzugsweise auf gleicher Höhe in der Grundfläche 2 des Radarsensors R₁ vorgesehen sein.

Vorzugsweise ist eine erste Anordnung 6.1 aus drei übereinander und parallel zueinander angeordneten Slot-Antennen 3 gebildet, wobei daneben beabstandet eine zweite Anordnung von nahezu identischen Slot-Antennen 3 gebildet ist. Dabei liegen die jeweiligen benachbarten Slot-Antennen 3 der Anordnung 6.1, 6.2 auf gleicher Höhe.

Hierdurch können von der ersten Anordnung 6.1 und zweiten Anordnung 6.2 von Slot-Antennen 3 entsprechenden Wellenfronten zur Erzeugung eines Erfassungsfeldes, die sich überlagern, erzeugt werden.

Sind andere Felder oder Winkel gewünscht, so sind auch andere Anordnungen 6.1, 6.2 von Slot-Antennen 3 in unterschiedlichen Abständen A und/oder B zueinander denkbar.

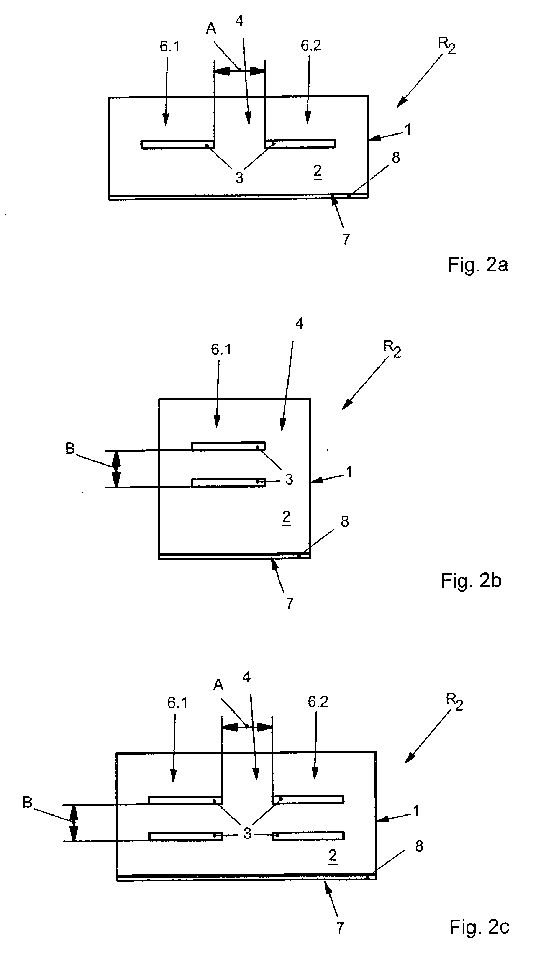

In den Figuren 2a bis 2c ist ein Sensor R₂ aufgezeigt, bei welchem zwei oder vier Slot-Antennen 3 vorgesehen sind, wobei jeweils zwei übereinander und zwei nebeneinander in den Anordnungen 6.1, 6.2 in der Grundplatte 2 ausgerichtet sind. Hierüber lässt sich ebenfalls Einfluss nehmen auf die Grösse sowie den Abstrahlwinkel α des Empfangsfeldes 5.

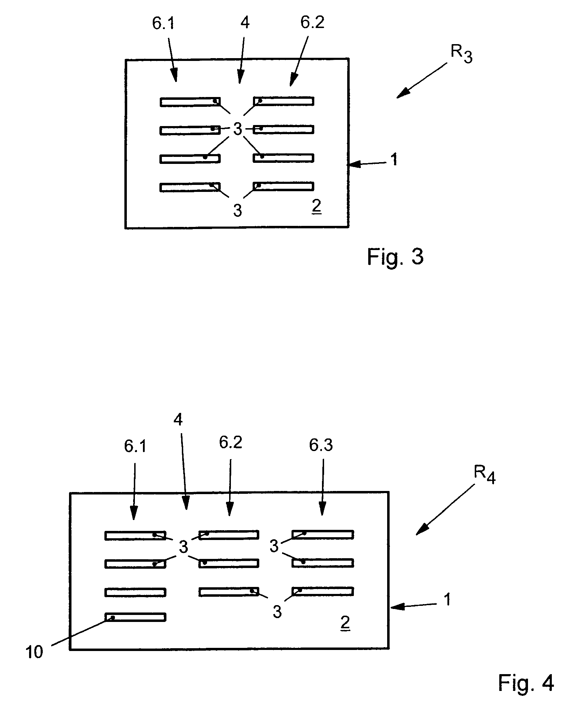

In Figur 3 ist ein Radarsensor R₃ aufgezeigt, bei welchem zwei Anordnungen 6.1, 6.2 nebeneinander aus jeweils vier übereinander angeordneten Slot-Antennen 3 vorgesehen sind.

Gemäss Figur 4 ist ein Radarsensor R₄ aufgezeigt, der aus drei nebeneinander angeordneten Anordnungen 6.1 bis 6.3 gebildet ist, die jeweils aus drei übereinander angeordneten Slot-Antennen 3 bestehen.

Im Rahmen der Erfindung soll jedoch liegen, dass insbesondere wenigstens zwei Anordnungen 6.1, 6.2 nebeneinander aus zumindest zwei Slot-Antennen 3 gebildet sind, wobei eine Mehrzahl von Anordnungen 6.1 bis 6.3 nebeneinander mit beliebig vielen Slot-Antennen 3 in der Grundfläche 2 gebildet sein können.

Wichtig ist ferner bei der vorliegenden Erfindung, dass in Abhängigkeit von einer wählbaren und vorgegebenen oder bestimmbaren Montagehöhe M_{H}, wie es insbesondere in Figur 1b angedeutet ist, Einfluss genommen werden kann auf die Grösse des Erfassungfeldes 5, in Abhängigkeit vom Abstrahlwinkel α.

Ferner wird hierdurch ebenfalls über die Montagehöhe M_{H}, die zumeist vorgegeben ist und über einen wählbaren und bestimmbaren Abstrahlwinkel α nach Anordnung der Slot-Antennen 3 in der Grundfläche 2 des Radarsensors R₁ der Abstrahlwinkel α bestimmt, um das Erfassungsfeld 5 in einem gewünschten Abstand vom Sensor R₁ in einem gewünschten Dynamikfeld D zu erzeugen.

Dabei kann beispielsweise bei der vorliegenden Erfindung bei einer vorgegebenen oder gewählten Montagehöhe M_{H} Einfluss genommen werden, insbesondere über die Anordnung der Slot-Antenne 3 auf die Grösse des Erfassungsfeldes 5 sowie auf einen Abstand vom Sensor zum Erfassungsfeld 5.

Ferner kann dem Radarsensor R₁ bis R₄ zumindest ein hier in den Figuren 1a und 1b angedeuteter Präsenzsensor 7 zusätzlich zugeordnet sein, der in einer Seitenfläche 8 vorgesehen ist. Der Präsenzsensor 7 kann auch eigenständig als einzelnes Bauteil hergestellt sein. Vorzugsweise sind Seitenflächen 8 und Grundfläche 2 winklig, insbesondere rechtwinklig zueinander ausgebildet, so dass über den Präsenzsensor 7 ein zusätzliches Erfassungsfeld 9 bzw. Präsenzfeld P detektierbar ist. Dieses zusätzliche Erfassungsfeld 9 dient beispielsweise dem Erkennen eines stationären Hindernisses, beispielsweise im Bewegungsbereich einer Türe oder eines Tores.

Ferner ist wichtig bei der vorliegenden Erfindung, dass beispielsweise zur Feineinstellung oder Feinjustierung beispielsweise mittels einer Fernsteuerung über die Phasenverschiebung der einzelnen reflektierenden Empfangssignale zwischen den Slot-Antennen 3, eine Feineinstellung bzw. eine Justierung des Abstrahlwinkels α möglich ist. Hierdurch kann mittels einer Fernbedienung die Grösse und der Abstand des Erfassungsfeldes 5 sehr leicht beeinflusst und verändert werden. Dies gewährleistet einen äusserst geringen Montageaufwand.

Insbesondere über eine Fernbedienung des Radarsensors R₁ ist dieser sehr leicht parametrisierbar.

Beispielsweise ist denkbar, dass ein erster montierter Radarsensor parameterisiert wird, und diese Parameter in der Fernbedienung abgelegt und abgespeichert werden, um dem nachfolgenden, einzustellenden weiteren Radarsensoren diese Daten lediglich via der Fernbedienung zu übermitteln. Dies soll ebenfalls im Rahmen der vorliegenden Erfindung liegen.

Ferner soll im Rahmen der vorliegenden Erfindung liegen, wie es beispielsweise in Figur 4 angedeutet ist, dass jedem Radarsensor R₁ bis R₄ und/oder Präsenzsensor 7 zumindest eine Hilfsantenne 10 zugeordnet sein kann, die dem bestehenden Radarsensor Energie entzieht. Hierdurch lässt sich der Radarsensor R₁ bis R₄ und/oder der Präsenzsensor 7 durch den Energieentzug auf Betriebssicherheit testen. Insbesondere durch die Belastung des eigentlichen Feldes des Radarsensors R₁ bis R₄ und auch des Präsenzsensors 7 ist eine Testversorgung, die in gleichen oder anderen Frequenzen der Antenne, insbesondere Slot-Antenne 3 erfolgen kann, möglich. Die entsprechenden Signale können permanent das Testsignal generiert werden, so dass die Betriebssicherheit des Radarsensors bzw. Präsenzsensors 7 permanent überprüft werden kann. Die Hilfsantenne 10 kann autonom und eigenständig ausgebildet sein und permanent die Betriebssicherheit des Radarsensors R₁ bis R₄ und/oder auch des Präsenzsensors 7 überprüfen.

| **Positionszahlenliste** | | | | | |
|---|---|---|---|---|---|
| 1 | Grundkörper | 34 | | 67 | |
| 2 | Grundfläche | 35 | | 68 | |
| 3 | Slot-Antenne | 36 | | 69 | |
| 4 | Anordnung | 37 | | 70 | |
| 5 | Erfassungsfeld | 38 | | 71 | |
| 6 | Anordnung | 39 | | 72 | |
| 7 | Präsenzsensor | 40 | | 73 | |
| 8 | Seitenfläche | 41 | | 74 | |
| 9 | Erfassungsfeld | 42 | | 75 | |
| 10 | Hilfsantenne | 43 | | 76 | |
| 11 | | 44 | | 77 | |
| 12 | | 45 | | 78 | |
| 13 | | 46 | | 79 | |
| 14 | | 47 | | | |
| 15 | | 48 | | R₁ | Radarsensor |
| 16 | | 49 | | R₂ | Radarsensor |
| 17 | | 50 | | R₃ | Radarsensor |
| 18 | | 51 | | R₄ | Radarsensor |
| 19 | | 52 | | | |
| 20 | | 53 | | | |
| 21 | | 54 | | α | Abstrahlwinkel |
| 22 | | 55 | | | |
| 23 | | 56 | | M_{H} | Montagehöhe |
| 24 | | 57 | | | |
| 25 | | 58 | | A | Abstand |
| 26 | | 59 | | B | Abstand |
| 27 | | 60 | | D | Dynamikfeld |
| 28 | | 61 | | P | Präsenzfeld |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben eines Radarsensors im Nahbereich zur Erzeugung eines detektierbaren Erfassungsfeldes (5) für die Erkennung von Personen und/oder stationären Objekten mit einer Antenne,
**dadurch gekennzeichnet,**
**dass** das Erfassungsfeld (5) elektronisch veränderbar oder justierbar ist.

2. Verfahren zum Betreiben eines Radarsensors im Nahbereich zur Erzeugung eines detektierbaren Erfassungsfeldes (5) für die Erkennung von Personen und/oder stationären Objekten mit einer Antenne, **dadurch gekennzeichnet, dass** ein Präsenzsensor (7) mit einem FMCW Radar für die Distanzmessung und/oder eine Radarsensor (R₁ bis R₄) mit zumindest einer unabhängigen Hilfsantenne (10) zur Durchführung von Selbsttest ausgestattet ist.

3. Verfahren nach Anspruch 1 oder 2, **dadurch gekennzeichnet, dass** über eine Auswertung der Frequenz und Phase der einzelnen reflektierten Antennensignale eine Auswertung erfolgt.

4. Verfahren nach wenigstens einem der Ansprüche 1 bis 3, **dadurch gekennzeichnet, dass** über die Phasenverschiebung der Antennensignale ein Abstrahlwinkel (α) des Erfassungsfeldes (5) eingestellt, insbesondere fein eingestellt oder justiert wird, wobei der Sensor, insbesondere Radarsensor senkrecht an einem beliebigen Untergrund, wie beispielsweise einer Wand oder einem Türrahmen angeordnet wird.

5. Verfahren nach Anspruch 4, **dadurch gekennzeichnet, dass** über den Abstrahlwinkel (α) in der Abhängigkeit einer Montagehöhe (M_{H}) das Erfassungsfeld (5) flächenmässig und ortsabhängig eingestellt bzw. ausgerichtet wird bzw. das Erfassungsfeld (5) wird nach unten geneigt ausgerichtet und wird ggf. durch Feinjustieren verändert.

6. Verfahren nach wenigstens einem der Ansprüche 1 bis 5, **dadurch gekennzeichnet, dass** der Radarsensor (R) mit einem Präsenzsensor (7) versehen wird.

7. Verfahren nach wenigstens einem der Ansprüche 1 bis 6, **dadurch gekennzeichnet, dass** mittels einer autonomen, eigenständigen Hilfsantenne (10) dem Radarsensor (R₁ bis R₄) und/oder Präsenzsensor (7) zur Testversorgung Energie entzogen wird und hierdurch der Radarsensor (R₁ bis R₄) und/oder der Präsenzsensor (7) auf Betriebssicherheit überprüft wird.

8. Verfahren nach Anspruch 7, **dadurch gekennzeichnet, dass** durch den Energieentzug mittels der Hilfsantenne (10) bzw. durch die Belastung des eigentlichen Erfassungsfeldes (5, 9) des Radarsensors (R) und/oder des Präsenzsensors (7) in anderen oder gleichen Frequenzen auswertbare Signale ermittelt werden, die der Auswertung der Betriebssicherheit des Radarsensors (R) und/oder Präsenzsensors (7) dienen.

9. Verfahren nach wenigstens einem der Ansprüche 1 bis 8, **dadurch gekennzeichnet, dass** über eine mittels Fernbedienung einstellbare Phasenverschiebung bzw. Auswertung der Frequenz und Phase zwischen Ausgangs- und Eingangssignal ein Erfassungsfeld (9) bezüglich Richtung, Ort und Grösse bzw. Fläche beinflussbar ist.

10. Verfahren zum Betreiben eines Radarsensors im Nahbereich zur Erzeugung eines detektierbaren Erfassungsfeldes (5) für die Erkennung von Personen und/oder stationären Objekten mit einer Antenne, **dadurch gekennzeichnet, dass** mittels eines Präsenzsensors (7) mit einem FMCW Radar für die Distanzmessung in einem Erfassungsfeld (9) stationäre Objekte durch Bestimmung von Phasenverschiebungen und Laufzeiten der reflektierten Signale nach Grösse und Ort lokalisierbar und bestimmbar sind.

11. Verfahren nach Anspruch 10, **dadurch gekennzeichnet, dass** der Bestimmung der Grösse, der Lage sowie der Höhe des Feldes oder des stationären Objektes im Erfassungsfeldes durch die Bestimmung der Laufzeiten bzw. durch Auswertung von Frequenz und Phase der reflektierten Signale ermöglicht wird.

12. Verfahren nach Anspruch 10 oder 11, **dadurch gekennzeichnet, dass** eine Distanzmessung zum Objekt im stationären Erfassungsfeld (9) durch die unterschiedlichen bzw. sich ändernden Laufzeiten bzw. durch eine Auswertung von Frequenz und Phase der reflektierten Signale erfolgt.

13. Radarsensor zur Erzeugung eines detektierbaren Erfassungsfeldes (5, 9) für die Erkennung von Personen und/oder statischen Objekten im Nahbereich mit einer Antenne (3), **dadurch gekennzeichnet, dass** die Antenne (3) als eine Mehrzahl von Endfire-Antennen, insbesondere Slot-Antennen (3) oder Patch-Antennen ausgebildet ist.

14. Radarsensor nach Anspruch 13, **dadurch gekennzeichnet, dass** eine Mehrzahl von Slot-Antennen (3) übereinander und/oder nebeneinander angeordnet sind.

15. Radarsensor nach Anspruch 13 oder 14, **dadurch gekennzeichnet, dass** die Slot-Antennen (3) in einer Grundfläche (2) angeordnet sind.

16. Radarsensor nach Anspruch 15, **dadurch gekennzeichnet, dass** die Anordnung der Slot-Antennen (3), bestehend aus mehreren nebeneinander und übereinander angeordneten Slot-Antennen (3) in der Grundfläche (2) angeordnet sind und über einen wählbaren bzw. voränderbaren Abstand (A) und/oder (B) der einzelnen Slot-Antennen (3) zueinander ein Abstrahlwinkel (α), ggf. auch durch phasenverschobenes Ansteuern der einzelnen Slot-Antennen (3) zueinander, veränderbar, einstellbar und/oder justierbar ist.

17. Radarsensor nach wenigstens einem der Ansprüche 13 bis 16, **dadurch gekennzeichnet, dass** durch eine unterschiedliche Ansteuerung von Anordnungen (4) der Slot-Antennen (3) bzw. der einzelnen Slot-Antennen (3) in der Grundfläche (2), ggf. in Abhängigkeit einer Montagehöhe (M_{H}) ein Ort und eine Grösse des Erfassungsfeldes (5), insbesondere Dynamikfeldes (D) bestimmbar und veränderbar ist.

18. Radarsensor nach wenigstens einem der Ansprüche 13 bis 17, **dadurch gekennzeichnet, dass** in einer Seitenfläche (8) ein zusätzlicher Präsenzsensor (7) als Radarsensor, insbesondere als FMCW Radarsensor vorgesehen ist.

19. Radarsensor nach Anspruch 18, **dadurch gekennzeichnet, dass** die Seitenfläche (8) rechtwinklig oder schräg abgewinkelt zur Grundfläche (2) ausgebildet ist.

20. Radarsensor nach wenigstens einem der Ansprüche 13 bis 19, **dadurch gekennzeichnet, dass** im Radarsensor (R₁ bis R₄) und/oder im Präsenzsensor (7) zumindest eine Hilfsantenne (10) vorgesehen ist, welche durch Energieentzug das Erfassungsfeld (5 und/oder 9) des Radarsensors (R₁ bis R₄) und/oder des Präsenzsensors (7) belastet und hierdurch der Radarsensor (R₁ bis R₄) und/oder Präsenzsensor (7) auf Betriebssicherheit testbar ist.

21. Radarsensor nach Anspruch 19 oder 20, **dadurch gekennzeichnet, dass** die Hilfsantenne (10) als autonome, eigenständige Hilfsantenne (10) dem Radarsensor (R₁ bis R₄) und/oder dem Präsenzsensor (7) zur Überprüfung auf Betriebssicherheit zugeordnet und in gleichen oder anderen Frequenzen betreibbar ist.

22. Radarsensor nach wenigstens einem der Ansprüche 15 bis 21, **dadurch gekennzeichnet, dass** eine Elektronik im Bereich einer der Grundfläche (2) gegenüberliegenden Rückseite angeordnet ist.

23. Radarsensor nach wenigstens einem der Ansprüche 13 bis 22, **dadurch gekennzeichnet, dass** der stationäre Sensor als Präsenzsensor (7) im Radarsensor (R₁ bis R₄) oder in diesen eingesetzt ist.

24. Radarsensor nach wenigstens einem der Ansprüche 13 bis 23, **dadurch gekennzeichnet, dass** eine erste Anordnung (6.1) aus Slot-Antennen (3) aus wenigstens zwei übereinander angeordneten Slot-Antennen (3) gebildet ist und eine zweite Anordnung (6.2) von Slot-Antennen (3) ebenfalls aus zumindest zwei übereinander angerodneten Slot-Antennen (3) gebildet ist und die erste Anordnung (6.1) zur zweiten Anordnung (6.2) von Slot-Antennen (3) nebeneinander beabstandet sind.

25. Radarsensor nach Anspruch 24, **dadurch gekennzeichnet, dass** sich die Signale der ersten Anordnung (6.1) von Slot-Antennen (3) mit den Signalen der zweiten Anordnung (6.2) von Slot-Antennen (3) in reflektierenden Wellenfronten in zwei oder mehreren Ebenen überlagern.

26. Radarsensor nach wenigstens einem der Ansprüche 18 bis 25, **dadurch gekennzeichnet, dass** in einem Grundkörper (1) Elektronik, die Slot-Antennen (3) sowie zumindest ein Präsenzsensor (7) als Einheit zu einem Radarsensor zusammengefasst sind.

27. Radarsensor zur Erzeugung eines detektierbaren Erfassungsfeldes (5, 9) für die Erkennung von Personen und/oder statischen Objekten im Nahbereich mit einer Antenne (3), **dadurch gekennzeichnet, dass** der Antenne (3) zumindest ein Sender und ein Empfänger zugeordnet ist, und durch Bestimmung unterschiedlicher Laufzeiten und/oder Fadenverschiebungen der Empfangssignale eine Grösse, eine Lage und/oder eine Höhe eines Objektes im vorgewählten Erfassungsfeldes (9) bestimmbar ist, wobei Sender und Empfänger zueinander lokal beabstandet sind.

28. Radarsensor nach Anspruch 27, **dadurch gekennzeichnet, dass** über entsprechende Winkel sowie über eine resultierende Phasenverschiebung zwischen Sender und Empfänger eine Bestimmung von Position und Ausleuchtung eines wählbaren Erfassungsfeldes (9) möglich ist.

29. Radarsensor nach Anspruch 27 oder 28, **dadurch gekennzeichnet, dass** mittels zumindest einem Sender und Empfänger eine Distanzmessung, Orts- und Höhenmessung zu einem beliebigen stationären Objekt im Erfassungsfeld (9) möglich ist.

30. Radarsensor nach einem der Ansprüche 27 bis 29, **dadurch gekennzeichnet, dass** eine Begrenzung des Erfassungfeldes (3) in Länge und Breite, ggf. auch justierbar und einstellbar ist.
